# EUROPÄISCHE PATENTSCHRIFT

(11) **EP 2 870 744 B1**
(45) Veröffentlichungstag und Bekanntmachung des Hinweises auf die Patenterteilung: **03.10.2018**
(21) Anmeldenummer: 13734375.2
(22) Anmeldetag: 01.07.2013
(51) Int. Cl.: H04M 1/725, H04W 4/02

(54) **ZUORDNEN EINER IN EINEM MOBILEN ENDGERÄT GESPEICHERTEN IDENTIFIKATION ZU EINEM ORT**
ASSOCIATION OF AN IDENTIFICATION STORED IN A MOBILE TERMINAL WITH A LOCATION
ETABLISSEMENT D'UNE ASSOCIATION ENTRE UNE IDENTIFICATION, MISE EN MÉMOIRE DANS UN TERMINAL MOBILE, ET UN LIEU

(30) Priorität: 05.07.2012 DE 102012211731
(43) Veröffentlichungstag der Anmeldung: 13.05.2015
(73) Patentinhaber: Bayerische Motoren Werke Aktiengesellschaft, 80809 München (DE)
(72) Erfinder: CHO, Young-Jae, 81925 München (DE)
(86) Internationale Anmeldenummer: PCT/EP2013/063764
(87) Internationale Veröffentlichungsnummer: WO 2014/005965

(56) Entgegenhaltungen:
- US-A1- 2008 085 689
- US-A1- 2011 137 520
- US-A1- 2011 298 924

## Beschreibung

Die Erfindung betrifft ein Verfahren zum Zuordnen einer in einem mobilen Endgerät gespeicherten Identifikation zu einem Ort, insbesondere einem Sitzplatz, und einer zu diesem Zweck eingerichteten Vorrichtung.

Heutzutage erfolgt in einem Personenkraftwagen (PKW) keine Identifikation des Fahrers oder der Passagiere beim Einsteigen. Allenfalls enthält ein Funkschlüssel des PKW eine Identifikation und für diese Identifikation werden im PKW Einstellungen wie die Sitzhöhe gespeichert. Beim Einsteigen wird vom PKW die Identifikation des Funkschlüssels empfangen und die Einstellungen für den PKW werden entsprechend übernommen, also beispielsweise die Sitzhöhe eingestellt. Jedoch beschränkt sich die Identifikation auf den jeweiligen Funkschlüssel. Wenn der Schlüssel von mehreren Personen verwendet wird, werden trotzdem stets dieselben gespeicherten Einstellungen übernommen.

Gleichzeitig sind heute sogenannte Smartphones weit verbreitet und werden oft nur von einer Person benutzt und mitgeführt.

Dokument US 2011/0298924 A1 offenbart ein Verfahren zum Erkennen des Ortes einer Rechenvorrichtung in einem Fahrzeug mittels Kameraerkennung. Ein ähnliches Problem betrifft die US 2011/0137520 A1, die ein Verfahren zum Steuern von Erlaubniseinstellungen eines Fahrzeugs offenbart. Die Druckschrift US 2008/085689 A1 offenbart einen Moduswechsel einer mobilen Kommunikationsvorrichtung und von Fahrzeugeinstellungen, wenn die mobile Kommunikationsvorrichtung in der Nähe eines Fahrzeugs ist.

Aufgabe der Erfindung ist es, eine verbesserte Identifikation einer Person bereitzustellen, die einen Sitzplatz, oder allgemeiner einen Ort, belegt.

Ein erfindungsgemäßes Verfahren zum Zuordnen einer in einem mobilen Endgerät gespeicherten Identifikation zu einem Ort, insbesondere einem Sitzplatz, umfasst die Merkmale des unabhängigen Anspruchs 1.

In dem Verfahren wird somit eine Verbindung hergestellt zwischen der Belegung eines Ortes und der Bewegung eines mobilen Endgerätes. Typischerweise werden mobile Endgeräte vom Benutzer mitgeführt und führen damit zumindest einen Teil der Bewegung des Benutzers aus. Diese Tatsache wird dafür verwendet festzustellen, wann ein Benutzer einen Ort belegt. Es wird erkannt, wann eine Bewegung des mobilen Endgeräts darauf hindeutet, dass eine das mobile Endgerät mitführende Person einen Ort einnimmt. Gleichzeitig wird über einen Sensor erfasst, welcher Ort belegt wird. Durch einen Vergleich der zeitlichen Abfolge, anders ausgedrückt: der Korrelation, der Belegung des Ortes und der Bewegung des mobilen Endgeräts lässt sich ein mobiles Endgerät bzw. dessen Identifikation einem Ort zuordnen. Mit anderen Worten: Es wird festgestellt, ob die Belegung des Ortes im im Wesentlichen gleichen Moment stattfindet wie die auf eine Belegung hindeutende Bewegung des mobilen Endgeräts. Da ein bestimmtes mobiles Endgerät meist von derselben Person mitgeführt wird, wird die Identifikation der einen Ort belegenden Person verbessert.

Ein weiterer Vorteil des Verfahrens ist, dass der Ort, dem die Identifikation zugeordnet wird, mithilfe des die Belegung des Ortes erfassenden Sensors genau bestimmt werden kann. In einer Situation, in der der Ort einer von mehreren Orten ist, kann somit bestimmt werden, welcher Ort von dem mobilen Endgerät eingenommen bzw. belegt wird. Somit wird es zum Beispiel möglich, dass verschiedenen belegten Sitzplätzen in einem PKW jeweils eine andere Identifikation zugeordnet werden kann. Der jeweiligen Identifikation bzw. der jeweiligen Person können dann personalisierte Inhalte, Dienste oder Funktionen angeboten werden. Letzteres unter der Berücksichtigung, dass ein Fahrer möglichst wenig vom Fahrgeschehen abgelenkt werden sollte. Ebenso können Inhalte zwischen den Personen ausgetauscht werden, sowie die Benutzerschnittstellen an die jeweiligen Personen angepasst werden. Es ist möglich einen Login-Prozess, insbesondere bei wechselnden Fahrern oder Insassen eines PKW, zu vereinfachen.

Bei mehreren mobilen Endgeräten ist es denkbar, nur für eine Anzahl an mobilen Endgeräten, die eins weniger als die Gesamtzahl ist, einen Zusammenhang zwischen der jeweiligen ersten und zweiten Zeit festzustellen. Das verbleibende Endgerät kann dann dem verbleibenden belegten Ort zugeordnet werden.

Bevorzugt wird das Verfahren von einer elektronischen Recheneinheit eines Fahrzeugs, insbesondere eines PKW, ausgeführt.

Die Zuordnung der Identifikation kann dazu verwendet werden, der den Ort belegenden Person personalisierte Dienste anzubieten oder beispielsweise für diese Person bzw. Identifikation gespeicherte Einstellungen zu übernehmen, insbesondere die Sitzposition anzupassen.

Das mobile Endgerät kann durch ein Tragen in der Hosentasche, Jackentasche oder Handtasche, dem Halten in der Hand oder ähnlichem von einer Person mitgeführt werden. Eine Bewegung des mobilen Endgeräts, die darauf hindeutet, dass ein Benutzer einen Ort belegt, kann ein auftretender Stillstand nach Bewegung sein, oder ein Stillstand mit vorhergehendem Verlust an Höhe bei dem Belegen eines Sitzplatzes.

Der ersten und der zweiten Zeit können jeweils Zeitpunkte oder Zeitspannen zugeordnet sein. Der Zusammenhang zwischen der ersten und der zweiten Zeit kann darin bestehen, dass der Betrag der Differenz zwischen dem der ersten Zeit zugeordneten Zeitpunkt und dem der zweiten Zeit zugeordneten Zeitpunkt weniger als ein Schwellwert ist; oder dass sich die der ersten Zeit zugeordnete Zeitspanne und die der zweiten Zeit zugeordnete Zeitspanne überlappen oder durch eine Zeitspanne getrennt sind, die kleiner als ein Schwellwert ist.

Wenn für mehrere Endgeräte und mehrere belegte Orte ein Zusammenhang festgestellt werden soll, kann die Feststellung des Zusammenhangs zwischen einzelnen Endgeräten und Orten auch basierend auf einer Minimierung der Beträge (oder Quadrate) der Differenzen zwischen den jeweiligen ersten und zweiten Zeiten durchgeführt werden.

Der die Belegung des Ortes erfassende und dem Ort zugeordneter Sensor kann ein druckempfindlicher Sensor, ein kapazitiver Sensor, eine Kamera mit entsprechender Bildverarbeitung oder, insbesondere im Fall eines Sitzplatzes, eine Sitzbelegungsmatte sein. Der Sensor kann auch dazu eingerichtet sein, eine nur kurzfristige nicht-Belegung, beispielsweise bei sich in der Belegung abwechselnden Personen, zu erfassen.

Das Empfangen einer Information kann das Empfangen über eine drahtgebundene oder drahtlose Verbindung sein, oder aber auch das Empfangen bzw. Abrufen eines von einem Programm oder einer Funktion bereitgestellten Ergebnisses innerhalb eines Programmablaufs sein.

Ein mobiles Endgerät kann ein Mobiltelefon, ein sogenanntes Smartphone, oder ein sogenannter Keyfob sein. Das mobile Endgerät kann Beschleunigungs- und/oder Drehratensensoren, Übertragungsmittel, insbesondere für die drahtlose Übertragung von Sensordaten oder Verarbeitungsetgebnissen, eine elektronische Recheneinheit, eine gespeicherte Identifikation, Authentifizierungsmerkmale und/oder Mittel zur Ausführung eines Programmes umfassen. Das mobile Endgerät kann dazu eingerichtet sein, die Identifikation und/oder Authentifizierungsmerkmale mithilfe der Übertragungsmittel zu übertragen. Insbesondere kann das mobile Endgerät dazu eingerichtet sein, die Zeit einer Bewegung des mobilen Endgeräts zu erfassen, die darauf schließen lässt, dass eine das mobile Endgerät mitführende Person einen Ort eingenommen hat, insbesondere einen Sitzplatz belegt hat, und diese Zeit zu übertragen. Alternativ kann das mobile Endgerät dazu eingerichtet sein, die Bewegung des mobilen Endgeräts zu erfassen und diese Bewegung zu übertagen.

Ein vorher unbelegter Ort umfasst einen Ort, der vor der Belegung durch die Person lange Zeit nicht belegt war, aber auch einen Ort, der nur kurzfristig unbelegt war, beispielsweise wenn die Belegung von einer Person zur anderen wechselt.

Die identifikation, die in dem mobilen Endgerät gespeichert ist, kann eine der Hardware des Endgeräts zugeordnete Identifikation sein, eine dem Betriebssystem oder einem Programm des Endgeräts zugeordnete Identifikation sein oder eine vom mitführenden Benutzer beziehungsweise von der mitführenden Person eingegebene Identifikation sein.

In einer Weiterbildung umfasst das Verfahren das Empfangen von Signalen, die die Belegung des Ortes und gegebenenfalls den Ort selbst angeben, basierend auf Signalen von dem Sensor, der die Belegung des Ortes erfasst, und das Bestimmen der ersten Zeit basierend auf den Signalen. Mit anderen Worten umfasst das Verfahren in dieser Weiterbildung auch die Erfassung bzw. Bestimmung, zu welcher Zeit der Ort belegt wird, basierend auf den Signalen des Sensors. Die erfasste oder bestimmte Zeit wird im weiteren Verfahren weiterverwendet.

In einer anderen Weiterbildung umfasst das Verfahren das Empfangen von Signalen, die die Bewegung des mobilen Endgerätes angeben, basierend auf Signalen von dem Sensor, der die Bewegung des mobilen Endgeräts erfasst; und das Bestimmen der zweiten Zeit basierend auf den Signalen. Mit anderen Worten umfasst das Verfahren in dieser Weiterbildung auch die Erfassung bzw. Bestimmung, zu welcher Zeit die Bewegung des mobilen Endgeräts darauf hinweist, dass ein Ort eingenommen wurde, basierend auf den Signalen des Sensors. Die erfasste oder bestimmte Zeit wird im weiteren Verfahren weiterverwendet. Das Bestimmen der zweiten Zeit kann abhängig von einem Typ der Belegung des Ortes sein. Der Typ der Belegung des Ortes kann ein Stehenbleiben sein, wenn der Ort durch ein Stehen an diesem Ort belegt wird, oder ein Setzen sein, wenn der Ort, beispielsweise ein Sitzplatz, durch ein Setzen belegt wird. Der Typ der Belegung kann voreingestellt sein, oder automatisch festgelegt werden oder empfangen werden. Das Bestimmen der zweiten Zeit kann das Erfassen eines Stillstandes des mobilen Endgerätes nach vorhergehender Bewegung umfassen oder das Erfassen eines Stillstandes des mobilen Endgerätes nach vorherigem Verlust an Höhe umfassen.

In einer bevorzugten Weiterbildung umfasst das Verfahren das Empfangen von Authentifizierungsmerkmalen von dem mobilen Endgerät. Diese Authentifizierungsmerkmale können ein Benutzername und ein Passwort sein und/oder sogenannte Credentials. Heutzutage werden in modernen PKW Infotainmentsysteme verbaut, die personalisierte Dienste anbieten. Um diese personalisierten Dienste nutzen zu können ist es allerdings erforderlich, dass sich ein Benutzer mit Benutzemamen und Passwort in diesen Systemen anmeldet. Dies ist ein unbequemer und unter Umständen als lang dauernd oder unkomfortabel empfundener Vorgang, insbesondere weil die Eingabemöglichkeiten in PKW oft gegenüber einem typischen Personalcomputer oder Laptop eingeschränkt sind. Mithilfe der bevorzugten Weiterbildung des Verfahrens kann sich ein das mobile Endgerät mitführender Benutzer authentifizieren, ohne separat seine Authentifizierungsmerkmale eingeben zu müssen. Das Verfahren kann weiter das Bereitstellen von personalisierten Diensten an dem Ort basierend auf den Authentifizierungsmerkmalen umfassen. Dem Benutzer werden damit an seinem Ort personalisierte Dienste angeboten.

In einer Variante umfasst das Verfahren das Veranlassen der Einstellung des Sitzplatzes entsprechend einer für das mobile Endgerät gespeicherten Einstellung, insbesondere der Sitzhöhe, Lehnenneigung. Auf diese Weise wird die Einstellung eines Sitzplatzes an die bekannten Bedürfnisse eines Benutzers angepasst.

### DETAILLIERTE BESCHREIBUNG EINES AUSFÜHRUNGSBEISPIELS

Im Folgenden wird anhand der beigefügten Zeichnung ein bevorzugtes Ausführungsbeispiel der Erfindung beschrieben.

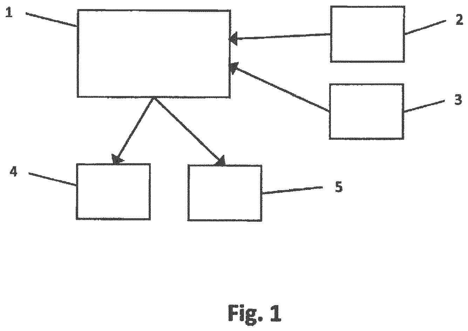

Fig. 1 zeigt einen Aufbau und das Zusammenwirken einzelner Elemente eines Ausführungsbeispiels der Erfindung.

In einem Personenkraftwagen befindet sich die elektronische Verarbeitungseinheit 1, die über Rechenkapazität verfügt und mit einem Bluetooth-Kommunikationsmodul ausgestattet ist. Weiterhin ist die elektronische Verarbeitungseinheit 1 mit der Sitzbelegungsmatte 3 elektronisch gekoppelt und empfängt von dieser Signale, ob der die Sitzbelegungsmatte umfassende Sitz belegt ist. Der elektronischen Verarbeitungseinheit 1 ist bekannt, welcher Sitz des Personenkraftwagens die Sitzbelegungsmatte umfasst.

Das Smartphone 2 verfügt über eine elektronische Recheneinheit, Bewegungssensoren, gespeicherte Identifikationen und Credentials, also beispielsweise eine Kombination aus Benutzername und Passwort, und ein Bluetooth-Kommunikationsmodul. Im Betrieb wird das Smartphone 2 mit der elektronischen Verarbeitungseinheit mittels einer Bluetooth-Verbindung gekoppelt, so dass Daten ausgetauscht werden können. Gleichzeitig führt das Smartphone 2 ein Programm, auch App genannt, aus, das Sensordaten von den Beschleunigungssensoren daraufhin auswertet, ob das Smartphone eine Bewegung ausführt, die darauf schließen lässt, dass die das Smartphone mitführende Person einen Sitzplatz eingenommen hat. Sobald dies erfasst wird, sendet das Smartphone die Zeit, zu der diese Bewegung erfasst wurde, an die elektronische Verarbeitungseinheit 1 zusammen mit der Identifikation und den gespeicherten Credentials.

Die Verarbeitungseinheit 1 verarbeitet gleichzeitig die von der Sitzbelegungsmatte 3 empfangenen Sensordaten, um die Zeit zu erfassen, zu der der die Sitzbelegungsmatte umfassende Sitz belegt wird.

Belegt nun eine das Smartphone mitführende Person den die Sitzbelegungsmatte umfassenden Sitz, so empfängt die Verarbeitungseinheit 1 die Zeit, die das Smartphone aufgrund der Bewegung erfasst hat und erfasst die Zeit, zu der der Sitz belegt wird aufgrund der Sensordaten der Sitzbelegungsmatte. Die Verarbeitungseinheit 1 stellt die Differenz der ersten und der zweiten Zeit fest. Ist diese geringer als ein Schwellwert, beispielsweise 1 Sekunde, so werden die Identifikation und die empfangenen Credentials des Smartphones dem die Sitzbelegungsmatte umfassenden Sitz zugeordnet.

Die Sitzeinstellung 4 wird anschließend von der Verarbeitungseinheit 1 angewiesen, die der Identifikation und/oder den Credentials zugeordnete Einstellung des Sitzes vorzunehmen, beispielsweise durch entsprechendes Anweisen von Aktuatoren.

Weiterhin wird einem Infotainmentmodul 5 von der Verarbeitungseinheit 1 die Identifikation und/oder den Credentials und der zugeordnete Sitz mitgeteilt. Das Infotainmentmodul 5 ermöglicht nun auf Anzeige- und Bedienelementen, die dem Sitz zugeordnet sind, das Abrufen von personalisierten Inhalten, beispielsweise einem Adressbuch oder E-Mail Eingangs.

## Patentansprüche

1. Verfahren zum Zuordnen einer in einem mobilen Endgerät (2) gespeicherten Identifikation zu einem Ort, insbesondere einem Sitzplatz, umfassend:
Empfangen einer ersten Information, die eine erste Zeit angibt, zu der ein vorher unbelegter Ort durch eine Person belegt wird, wobei die Belegung des Ortes mithilfe eines dem Ort zugeordneten Sensors erfasst wird;
Empfangen einer zweiten Information, die eine zweite Zeit angibt, zu der die Bewegung des mobilen Endgeräts (2) darauf schließen lässt, dass, wenn das mobile Endgerät (2) von einer Person mitgeführt würde, die das Endgerät (2) mitführende Person den Ort durch ein Setzen belegen würde, wobei die Bewegung mithilfe von einem Sensor in dem mobilen Endgerät (2) erfasst wird;
Feststellen eines Zusammenhangs zwischen der ersten Zeit und der zweiten Zeit;
Empfangen der Identifikation;
Zuordnen der Identifikation zu dem Ort.

2. Verfahren nach Anspruch 1, wobei der Ort ein Sitzplatz ist, insbesondere ein Sitzplatz in einem Fahrzeug.

3. Verfahren nach einem der vorhergehenden Ansprüche, ferner umfassend:
Empfangen von Signalen, die die Belegung des Ortes angeben, basierend auf Signalen von dem Sensor (3), der die Belegung des Ortes erfasst;
Bestimmen der ersten Zeit basierend auf den Signalen.

4. Verfahren nach einem der vorhergehenden Ansprüche, ferner umfassend:
Empfangen von Signalen, die die Bewegung des mobilen Endgerätes (2) angeben, basierend auf Signalen von dem Sensor, der die Bewegung des mobilen Endgeräts erfasst;
Bestimmen der zweiten Zeit basierend auf den Signalen.

5. Verfahren nach einem der vorhergehenden Ansprüche, ferner umfassend:
Empfangen von Authentifizierungsmerkmalen von dem mobilen Endgerät (2).

6. Verfahren nach Anspruch 5, ferner umfassend:
Zuordnen von Zugriffsrechten zu dem Ort abhängig von den empfangenen Authentifizierungsmerkmalen.

7. Verfahren nach Anspruch 2, ferner umfassend:
Veranlassen der Einstellung des Sitzplatzes entsprechend einer für das mobile Endgerät (2) gespeicherten Einstellung, insbesondere der Sitzhöhe, Lehnenneigung.

8. Vorrichtung mit elektonischer Recheneinheit (1) und Empfänger, die dazu eingerichtet ist, das Verfahren nach einem der Ansprüche 1 bis 7 auszuführen.

9. Computerprogramm, das bei Ausführung durch einen Computer mit elektronischer Recheneinheit, den Computer dazu veranlasst, das Verfahren nach einem der Ansprüche 1 bis 7 auszuführen.

## Claims

1. A method for associating an identification stored in a mobile terminal (2) with a location, more especially a seat, comprising the following steps:
receiving a first piece of information, which indicates a first time at which a previously unoccupied location is occupied by a person, wherein the occupation of the location is detected by means of a sensor associated with the location;
receiving a second piece of information, which indicates a second time at which the movement of the mobile terminal (2) makes it possible to conclude that, if the mobile terminal (2) were carried by a person, the person carrying the terminal (2) would occupy the location by sitting, wherein the movement is detected with the aid of a sensor in the mobile terminal (2);
establishing a relationship between the first time and the second time;
receiving the identification;
associating the identification with the location.

2. A method according to claim 1, wherein the location is a seat, more especially a seat in a vehicle.

3. A method according to either one of the preceding claims, further comprising the steps of:
receiving signals that indicate the occupation of the location on the basis of signals from the sensor (3) which detects the occupation of the location;
determining the first time on the basis of the signals.

4. A method according to any one of the preceding claims, further comprising:
receiving signals which indicate the movement of the mobile terminal (2) on the basis of signals from the sensor which detects the movement of the mobile terminal;
determining the second time on the basis of the signals.

5. A method according to any one of the preceding claims, further comprising the step of:
receiving authentication features from the mobile terminal (2).

6. A method according to claim 5, further comprising:
associating access rights with the location depending on the received authentication features.

7. A method according to claim 2, further comprising:
initiating the adjustment of the seat in accordance with a setting stored for the mobile terminal (2), more especially the seat height and/or backrest tilt.

8. A device comprising an electronic computing unit (1) and receiver, which drive is designed to carry out the method according to any one of claims 1 to 7.

9. A computer program which, when run by a computer comprising an electronic computing unit, prompts the computer to carry out the method according to any one of claims 1 to 7.

## Revendications

1. Procédé permettant d'associer une identification enregistrée dans un terminal mobile (2) à un lieu, en particulier à une place assise comprenant des étapes consistant à :
recevoir une première information qui spécifie une première heure à laquelle un lieu auparavant non occupé devient occupé par une personne, l'occupation du lieu étant détectée à l'aide d'un capteur associé au lieu,
recevoir une seconde information spécifiant une seconde heure à laquelle le déplacement du terminal mobile (2) permet de conclure que si le terminal mobile (2) a été emporté par une personne la personne ayant emporté le terminal (2) a occupé le lieu en s'asseyant, le déplacement étant détecté à l'aide d'un capteur situé dans le terminal mobile (2),
déterminer une relation entre la première heure et la seconde heure,
recevoir l'identification,
associer l'identification au lieu.

2. Procédé conforme à la revendication 1,
selon lequel le lieu est une place assise, en particulier une place assise dans un véhicule.

3. Procédé conforme à l'une des revendications précédentes, comprenant en outre des étapes consistant à :
recevoir des signaux qui spécifient l'occupation du lieu sur le fondement de signaux du capteur (3) qui détecte l'occupation du lieu,
déterminer la première heure sur le fondement des signaux.

4. Procédé conforme à l'une des revendications précédentes, comprenant en outre des étapes consistant à :
recevoir des signaux qui spécifient le déplacement du terminal mobile (2) sur le fondement de signaux du capteur qui détecte le déplacement du terminal mobile,
déterminer la seconde heure sur le fondement des signaux.

5. Procédé conforme à l'une des revendications précédentes,
comprenant en outre une étape consistant à recevoir des caractéristiques d'authentification du terminal mobile (2).

6. Procédé conforme à la revendication 5,
comprenant en outre une étape consistant à associer des droits d'accès au lieu en fonction des caractéristiques d'authentification reçues.

7. Procédé conforme à la revendication 2,
comprenant en outre une étape consistant à effectuer le réglage de la place assise en fonction d'un réglage enregistré pour le terminal mobile (2), en particulier la hauteur du siège ou l'inclinaison du dossier.

8. Dispositif comprenant une unité de calcul électronique (1) et des récepteurs susceptible de mettre en oeuvre le procédé conforme à l'une des revendications 1 à 7.

9. Programme d'ordinateur qui, lorsqu'il est exécuté sur un ordinateur équipé d'une unité de calcul électronique permet à l'ordinateur de mettre en oeuvre le procédé conforme à l'une des revendications 1 à 7.
